# EUROPÄISCHE PATENTSCHRIFT

(11) **EP 3 535 839 B1**
(45) Veröffentlichungstag und Bekanntmachung des Hinweises auf die Patenterteilung: **16.09.2020**
(21) Anmeldenummer: 17777001.3
(22) Anmeldetag: 26.09.2017
(51) Int. Cl.: H02M 3/02

(54) **ENERGIETECHNISCHES KOPPELN EINES HOCHVOLTBORDNETZES MIT EINEM KLEINSPANNUNGSBORDNETZ**
ELECTRICALLY COUPLING A HIGH-VOLTAGE ON-BOARD ELECTRICAL SYSTEM TO A LOW-VOLTAGE ON-BOARD ELECTRICAL SYSTEM
COUPLAGE PAR TECHNIQUE ÉNERGÉTIQUE D'UN RÉSEAU DE BORD HAUTE TENSION ET D'UN RÉSEAU DE BORD BASSE TENSION

(30) Priorität: 03.11.2016 DE 102016221514
(43) Veröffentlichungstag der Anmeldung: 11.09.2019
(73) Patentinhaber: Audi AG, 85045 Ingolstadt (DE)
(72) Erfinder: HINTERBERGER, Michael, 85098 Großmehring (DE); HELLENTHAL, Berthold, 90596 Schwanstetten (DE); BLUM, André, 85080 Gaimersheim (DE); FEST, Markus, 86576 Schiltberg (DE)
(86) Internationale Anmeldenummer: PCT/EP2017/074275
(87) Internationale Veröffentlichungsnummer: WO 2018/082843

(56) Entgegenhaltungen:
- EP-A2- 2 451 064
- DE-A1-102014 205 650

## Beschreibung

Die Erfindung betrifft eine Energiekopplungseinrichtung zum energietechnischen Koppeln eines für Gleichspannung ausgelegten elektrischen Hochvoltbordnetzes mit einem für Gleichspannung ausgelegten elektrischen Gleichspannungsbordnetz, mit einem Hochvoltanschluss zum Anschließen der Energiekopplungseinrichtung an das Hochvoltbordnetz, einem Kleinspannungsanschluss zum Anschließen der Energiekopplungseinrichtung an das Kleinspannungsbordnetz, einem an den Hochvoltanschluss angeschlossenen Hochvoltenergiewandler, einem an den Kleinspannungsanschluss angeschlossenen Niedervoltenergiewandler, einem Gleichspannungszwischenkreis, an den der Hochvoltenergiewandler und der Niedervoltenergiewandler zum elektrischen Koppeln der beiden Energiewandler angeschlossen sind, und eine Steuereinheit zum Steuern der Energiewandler. Die Erfindung betrifft weiterhin Batterie mit einem Batteriegehäuse und wenigstens zwei an dem Batteriegehäuse angeordneten Batterieanschlusspolen zum Anschließen der Batterie an ein Bordnetz, mit einer Mehrzahl von Batteriezellen, die in dem Batteriegehäuse angeordnet sind und die mechanisch miteinander verbunden und elektrisch gemäß einem vorgegebenen Anschlussschema miteinander gekoppelt und an die Batteriepole angeschlossen sind. Die Erfindung betrifft ferner ein Kraftfahrzeug mit einem Hochvoltbordnetz und einem Kleinspannungsbordnetz. Weiterhin betrifft die Erfindung ein Verfahren zum Betreiben einer ein für Gleichspannung ausgelegtes Hochvoltbordnetz mit einem für Gleichspannung ausgelegten elektrischen Kleinspannungsbordnetz elektrisch koppelnden Energiekopplungseinrichtung mit einem an das Hochvoltbordnetz angeschlossenen Hochvoltenergiewandler und einem an das Kleinspannungsbordnetz angeschlossenen Niedervoltenergiewandler, die mittels eines Gleichspannungszwischenkreises elektrisch gekoppelt werden, wobei die Energiewandler mittels einer Steuereinheit gesteuert werden.

Energiekopplungseinrichtungen, Kraftfahrzeuge mit Energiekopplungseinrichtungen sowie Verfahren zu deren Betrieb sind im Stand der Technik umfänglich bekannt. Sie dienen insbesondere der elektrischen Kopplung von elektrischen Energieverteilungsnetzen wie dem Hochvoltbordnetz und dem Kleinspannungsbordnetz. Vorliegend liegt der Fokus auf Gleichspannungsenergieverteilungsnetzen, wobei an wenigstens einem der Energieverteilungsnetze ein elektrischer Energiespeicher nach Art einer Batterie angeschlossen ist. Ist die Batterie Bestandteil des Hochvoltbordnetzes, wird sie auch als Hochvoltbatterie bezeichnet.

Elektrische Energieverteilungsnetze sowie auch Batterien hierfür finden neben stationären Anwendungen, wie beispielsweise bei unterbrechungsfreien Energieversorgungseinrichtungen, elektrischen Energieversorgungseinrichtungen im Inselbetrieb und/oder dergleichen, auch bei Kraftfahrzeugen Einsatz, und zwar insbesondere bei elektrisch antreibbaren Kraftfahrzeugen, wie beispielsweise Elektrofahrzeugen, Hybridfahrzeugen oder dergleichen.

Sowohl das Hochvoltbordnetz als auch das Kleinspannungsbordnetz dienen der Verteilung von elektrischer Energie zwischen an dem jeweiligen Bordnetz angeschlossenen elektrischen Einheiten, insbesondere bei einem Kraftfahrzeug. Solche elektrischen Einheiten können neben einem elektrischen Energiespeicher, beispielsweise der Hochvoltbatterie des Hochvoltbordnetzes oder dergleichen, elektrischen Verbrauchern und/oder dergleichen auch eine elektrische Energiequelle, beispielsweise ein Generator, eine Brennstoffzelle und/oder dergleichen, sowie insbesondere bei elektrisch antreibbaren Fahrzeugen auch eine elektrische Antriebseinrichtung umfassen, die dem Antrieb des elektrisch antreibbaren Kraftfahrzeugs dient. Darüber hinaus kann eine Reihe weiterer elektrischer Einheiten, beispielsweise eine Beleuchtungseinheit, Scheinwerfer des Kraftfahrzeugs, eine Innenbeleuchtung des Kraftfahrzeugs und/oder dergleichen, aber auch weitere Funktionseinheiten wie ein Autoradio, ein Navigationsgerät, ein elektrisch angetriebener Klimakompressor und/oder dergleichen umfasst sein.

Eine gattungsgemäße Energiekopplungseinrichtung ist beispielsweise aus der DE 10 2014 205 650 A1 bekannt. Diese offenbart einen zweistufigen Gleichspannungswandler mit Leistungsskalierung. Zu diesem Zweck ist eine hochvoltseitige Schaltungsanordnung vorgesehen, die eine Mehrzahl von parallelgeschalteten Hochsetz-Tiefsetz-Stellern umfasst. Mittels der hochvoltseitigen Schaltungsanordnung wird eine Spannungsanpassung von einer Hochvoltseite auf eine mittlere Gleichspannung hergestellt. Mittels der hochvoltseitigen Schaltungsanordnung wird die mittlere Gleichspannung auf einem konstanten Wert gehalten. An die mittlere Gleichspannung ist eine niedervoltseitige Schaltungsanordnung angeschlossen, die eine energietechnische Kopplung der mittleren Gleichspannung mit einer niedervoltseitigen Gleichspannung bereitstellt. Die niedervoltseitige Schaltungsanordnung arbeitet mit einer festen Taktfrequenz in einem Arbeitspunkt, der im Wesentlichen ein festes Übertragungsverhältnis aufweist.

Weiterhin offenbart die DE 10 2009 046 501 A1 ein Batteriesystem mit DC/DC-Umsetzern. Die DE 10 2014 205 652 A1 offenbart darüber hinaus ein Modulationsverfahren für einen Hochsetzsteller-Betrieb eines Gegentaktwandlers und die DE 198 29 777 A1 offenbart einen DC/DC-Konverter.

Auch wenn sich der Stand der Technik bewährt hat, so besteht weiterhin Verbesserungsbedarf. Es hat sich nämlich gezeigt, dass der Einsatz von Hochvoltbatterien einer ständigen Entwicklung, insbesondere Verbesserung unterliegt. Dadurch wird es möglich, Hochvoltbatterien auch in Bereichen einzusetzen, die bisher anderen Batterietechnologien vorbehalten waren, beispielsweise basierend auf Blei-Säure-Batterien oder dergleichen. Insbesondere ist es wünschenswert, Batterietechnologien mit geringer Zukunftsperspektive, wie beispielsweise die Blei-Säure-Batterie oder dergleichen, durch neue Technologien zu ersetzen, beispielsweise basierend auf einer Lithium-Ion-Technologie oder dergleichen. Dabei erweist sich die Lehre der DE 10 2014 205 650 A1 als nachteilig, als dass gerade im Teillastbereich nur geringe Wirkungsgrade erreichbar sind. Gerade der Teillastbereich hat sich aber als häufiger Betriebszustand herausgestellt. Die Lehre der DE 10 2014 205 650 A1 hat sich auch deshalb bisher nicht verbreitet.

Der Erfindung liegt somit die Aufgabe zugrunde, eine Energiekopplungseinrichtung bereitzustellen, die eine verbesserte Energiekopplung ermöglicht, und dadurch insbesondere auch eine Technologieumstellung auf einfache Weise hinsichtlich einer Batterietechnologie ermöglicht.

Als Lösung werden mit der Erfindung eine Energiekopplungseinrichtung, eine Batterie, ein Kraftfahrzeug sowie ein Verfahren gemäß den unabhängigen Ansprüchen vorgeschlagen.

Vorteilhafte Weiterbildungen ergeben sich anhand von Merkmalen der abhängigen Ansprüche.

Bezüglich einer gattungsgemäßen Energiekopplungseinrichtung wird insbesondere vorgeschlagen, dass die Steuereinheit ausgebildet ist, Wandlungswirkungsgrade der Energiewandler zu ermitteln und eine Zwischenkreisgleichspannung des Gleichspannungszwischenkreises abhängig von einem durch eine Summe der Wandlungswirkungsgrade gebildeten Gesamtwirkungsgrad einzustellen, um den Gesamtwirkungsgrad zu maximieren.

Batterieseitig wird insbesondere vorgeschlagen, dass die Batterie eine Energiekopplungseinrichtung der Erfindung aufweist, die in dem Batteriegehäuse angeordnet ist.

Kraftfahrzeugseitig wird insbesondere vorgeschlagen, dass das Kraftfahrzeug eine Energiekopplungseinrichtung gemäß der Erfindung oder eine Batterie gemäß der Erfindung aufweist.

Verfahrensseitig wird insbesondere vorgeschlagen, dass Wandlungswirkungsgrade der Energiewandler ermittelt werden und eine Zwischenkreisgleichspannung des Gleichspannungszwischenkreises abhängig von einem durch eine Summe der Wandlungswirkungsgrade gebildeten Gesamtwirkungsgrad eingestellt wird, um den Gesamtwirkungsgrad zu maximieren.

Der Erfindung liegt der Gedanke zugrunde, dass durch Berücksichtigung sämtlicher Wirkungsgrade der Betrieb, insbesondere im wichtigen Teillastbereich, wesentlich verbessert werden kann, sodass die Nutzung der Energiekopplungseinrichtung verbessert werden kann. Dazu nutzt die Erfindung die Erkenntnis, dass die einzelnen Wandlungswirkungsgrade besonders im Teillastbereich von einer Größe eines Werts der Zwischenkreisgleichspannung abhängig sind. Die sich daraus ergebenden Effekte können insbesondere genutzt werden, um dadurch bei einem Technologiewechsel eine höhere Energiedichte der Batterie gemäß einer neuen Technologie vorteilhaft verfügbar zu machen. Beispielsweise kann dadurch auch Bauraum für die Energiekopplungseinrichtung bereitgestellt werden, die dazu dient, diese Batterie gemäß der neuen Technologie an eine bestehende elektrische Anlage, insbesondere des Kraftfahrzeugs, anzupassen. Vorzugsweise kann dadurch eine bestehende Batterietechnologie durch eine andere, insbesondere neuere Batterietechnologie ausgetauscht werden. Besonders wenn genormte Konstruktionen beziehungsweise Batteriegehäuse verwendet werden, kann vorgesehen sein, dass bereits bestehende Einrichtungen beziehungsweise Kraftfahrzeuge auf eine neue Batterietechnologie auf einfache Weise umgerüstet werden können. Vorzugsweise bezieht sich die Erfindung darauf, dass neuartige Hochvoltbatterien auf Basis von Lithium-Ion-Technologie für eine Vielzahl von Anwendungen nutzbar gemacht werden können, bei denen eine Umstellung ansonsten einen hohen Entwicklungs- und Kostenaufwand nach sich ziehen würde. Dem Grunde nach ist die Erfindung hierauf jedoch nicht beschränkt und kann grundsätzlich bei zu koppelnden Bordnetzen eingesetzt werden.

Dabei nutzt die Erfindung, dass durch Bereitstellen des Gleichspannungszwischenkreises mit der einstellbaren Zwischenkreisgleichspannung ein optimierter Gesamtwirkungsgrad erreicht werden kann, sodass auch bei hoher Integrationsdichte, beispielsweise Anordnen der Energiekopplungseinrichtung in einem Batteriegehäuse der Hochvoltbatterie oder dergleichen ein zuverlässiger und sinnvoller Betrieb gewährleistet werden kann.

Dies kann unter anderem dadurch erreicht werden, dass - anders als im Stand der Technik üblich - bei der Erfindung die Zwischenkreisgleichspannung nicht konstant sondern gerade variabel ist, damit nämlich in Abhängigkeit der Wandlungsleistung der Energiewandler ein Gesamtwirkungsgrad der Energiekopplungseinrichtung maximiert werden kann. Dies hat nicht nur den Vorteil der hohen Energienutzung, sondern es hat darüber hinaus auch den Vorteil der geringen Verluste, die häufig in Form von Wärme anfallen und gerade bei Batterien, insbesondere auch bei Hochvoltbatterien, sich sehr nachteilig auswirken können. Eine etwaig vorgesehene Kühlung für die Batterie kann dadurch reduziert werden oder sogar entfallen, insbesondere wenn die Energiekopplungseinrichtung in ein Batteriegehäuse integriert angeordnet ist. Teilweise kann durch die Erfindung eine entsprechende Nutzung von Hochvoltbatterien auch gerade erst ermöglicht werden. Im Übrigen vermeidet es die Erfindung dadurch auch, dass hochvoltseitig komplexe Schaltungsanordnungen, insbesondere von parallelgeschalteten Hochsetz-Tiefsetz-Stellern erforderlich sind. Dies erweist sich nämlich nicht nur hinsichtlich des Wirkungsgrads als nachteilig, sondern es benötigt auch einen entsprechenden Konstruktions- und Steuerungsaufwand, der sich gerade bei Technologieumstellungen in Bezug auf Batterien als Hindernis erweisen kann. Die Energiewandler sind vorzugsweise für eine bidirektionale Energiekopplung ausgebildet. Die Energiewandler können zumindest teilweise als DC/DC-Wandler ausgebildet sein. Vorzugsweise ist der DC/DC-Wandler ebenfalls für eine bidirektionale Energiekopplung ausgebildet. Er kann darüber hinaus als Hochsetzsteller (booster) und/oder auch als Tiefsetzsteller (buck) ausgebildet sein.

Für eine Technologieumstellung bei Batterien erweist es sich ferner als vorteilhaft, dass in vielen Bereichen Gehäuse für die Batterien und deren elektrische Anschlüsse genormt sind. Dadurch ist es möglich, bei bestehenden Einrichtungen, insbesondere Kraftfahrzeugen der gattungsgemäßen Art, vermehrt neue Batteriekonzepte insbesondere für Hochvoltbatterien einzusetzen, um die Leistungsfähigkeit der jeweiligen elektrischen Anlage der Einrichtung beziehungsweise des Kraftfahrzeugs zu verbessern.

Die Energiekopplungseinrichtung kann als eine einzeln handhabbare Baueinheit bereitgestellt sein. Sie kann darüber hinaus insbesondere auch modular aufgebaut sein, beispielsweise indem wenigstens einer der beiden Energiewandler mittels einer elektromechanischen Verbindungseinrichtung lösbar in oder auch an der Energiekopplungseinrichtung befestigt sein kann.

Bevorzugt handelt es sich bei dem Hochvoltbordnetz um ein Bordnetz, welches eine Hochvoltbatterie umfasst. Hochvolt meint insbesondere eine Gleichspannung, die durch eine Norm wie der ECE R 100 vorgegeben ist, beispielsweise eine elektrische Gleichspannung von größer als 60 V. Gemäß dieser Norm sind besondere Maßnahmen zum Schutz von Personen vor elektrischem Schlag vorzusehen. Insbesondere umfasst der Begriff Hochvolt eine Gleichspannung, die größer ist als 120 V. Im Sinne dieser Offenbarung soll eine Kleinspannung eine Gleichspannung sein, die kleiner als 120 V, insbesondere kleiner als 80 V ist.

Das Kleinspannungsbordnetz kann für eine Bemessungsspannung von zum Beispiel 12 V, 24 V, 48 V oder auch 60 V oder auch einer anderen elektrischen Gleichspannung ausgebildet sein. Häufig ist die Bemessungsspannung für das Kleinspannungsbordnetz 60 V oder kleiner, sodass die in der vorgenannten Norm erforderlichen hohen Sicherheitsmaßnahmen vermieden werden können. Das Kleinspannungsbordnetz umfasst deshalb häufig elektrische Einheiten, insbesondere elektrische Verbraucher, die lediglich eine kleine elektrische Leistung benötigen, beispielsweise ein Autoradio, ein Navigationsgerät, eine Kraftfahrzeuginnenraumbeleuchtung, ein Kraftfahrzeugscheinwerfer und/oder dergleichen. Vorliegend kann durch das Kleinspannungsbordnetz jedoch auch eine elektrische Antriebseinrichtung für das elektrisch antreibbare Kraftfahrzeug umfasst sein.

Das Hochvoltbordnetz umfasst vorzugsweise zumindest die Hochvoltbatterie. Darüber hinaus können grundsätzlich natürlich auch weitere elektrische Einheiten beziehungsweise elektrische Verbraucher am Hochvoltbordnetz vorgesehen sein. Ein wichtiger Aspekt der Erfindung ist jedoch, eine neue Batterietechnologie für bestehende elektrische Anlagen beziehungsweise Einrichtungen unter Nutzung von Hochvoltbatterien nutzbar zu machen. Eine Hochvoltbatterie im Sinne dieser Offenbarung ist eine Batterie, die für eine Bemessungsspannung von größer als 120 V ausgelegt ist. Vorzugsweise ist die Hochvoltbatterie für eine Bemessungsspannung von 400 V, insbesondere 800 V, ausgebildet. Die Hochvoltbatterie ist vorzugsweise eine Batterie, die Lithium-lon-basierte Batteriezellen nutzt.

Die Energiekopplungseinrichtung weist einen Hochvoltanschluss zum Anschließen des Hochvoltbordnetzes auf. Ist die Energiekopplungseinrichtung in das Hochvoltbordnetz, beispielsweise in die Hochvoltbatterie, integriert, kann der Hochvoltanschluss natürlich ebenso dort integriert sein beziehungsweise entfallen. Das gleiche gilt dem Grunde nach natürlich auch für das Kleinspannungsbordnetz.

Sowohl der Hochvoltenergiewandler als auch der Niedervoltenergiewandler können jeweils durch einen DC/DC-Wandler gebildet sein. Besonders vorteilhaft erweist es sich, wenn der Hochvoltenergiewandler zugleich eine galvanische Trenneinheit umfasst, sodass der Gleichspannungszwischenkreis vom Hochvoltbordnetz galvanisch getrennt ist. Hierdurch kann eine verbesserte Sicherheit in Bezug auf die elektrische Sicherheit erreicht werden. Dem Grunde nach kann dies natürlich auch für den Niedervoltenergiewandler vorgesehen sein.

Der Gleichspannungszwischenkreis dient unter anderem dazu, den Hochvoltenergiewandler energietechnisch mit dem Niedervoltenergiewandler zu koppeln. Aus diesem Grund sind die beiden Energiewandler an den Gleichspannungszwischenkreis angeschlossen. Die Energiekopplungseinrichtung umfasst ferner eine Steuereinheit zum Steuern der Energiewandler, und zwar mindestens des Hochvoltenergiewandlers und des Niedervoltenergiewandlers. Mit der Steuereinheit kann vorzugsweise die Leistung eingestellt werden, die von dem Hochvoltenergiewandler und dem Niedervoltenergiewandler gewandelt wird. Zugleich dient sie dazu, die Zwischenkreisgleichspannung des Gleichspannungszwischenkreises einzustellen. Dies kann beispielsweise durch geeignetes Steuern der Energiewandler erfolgen. Die Zwischenkreisgleichspannung kann vorzugsweise eine Gleichspannung von weniger als etwa 120 V, bevorzugt weniger als etwa 100 V sein. Besonders bevorzugt ist sie jedoch etwas größer als die Kleinspannung des Kleinspannungsbordnetzes.

Die Steuereinheit ist ferner ausgebildet, Wandlungswirkungsgrade der Energiewandler zu ermitteln. Vorzugsweise ist sie ausgebildet, den Wandlungswirkungsgrad des Hochvoltenergiewandlers und des Niedervoltenergiewandlers zu ermitteln. Zu diesem Zweck können entsprechend Sensoren vorgesehen sein, die es erlauben, aus gelieferten Sensorsignalen die jeweiligen Wandlungswirkungsgrade zu ermitteln. Die Steuereinheit ermittelt dann eine Summe der Wandlungswirkungsgrade, die einen Gesamtwirkungsgrad bildet. Durch geeignetes Steuern der Zwischenkreisgleichspannung des Gleichspannungszwischenkreises können die Wandlungswirkungsgrade der beiden Energiewandler beeinflusst werden. Dabei steuert die Steuereinheit die Zwischenkreisspannung derart, dass der Gesamtwirkungsgrad maximiert wird. Das Steuern der Zwischenkreisgleichspannung kann ergänzend unter Nutzung von Kennlinienfeldern oder auch bereits zuvor erhobenen Wirkungsgradermittlungen erfolgen. Natürlich können diese Daten und/oder Parameter während des bestimmungsgemäßen Betriebs der Energiekopplungseinrichtung auch aktualisiert werden, um beispielsweise Veränderungen des jeweiligen Wandlungswirkungsgrades aufgrund von Alterung, Temperatureinflüssen und/oder dergleichen besser berücksichtigen zu können. Das Steuern der Zwischenkreisgleichspannung kann zum Beispiel dadurch erfolgen, dass die Steuereinheit eine gewandelte elektrische Leistung der Energiewandler steuert.

Insgesamt kann mit der Erfindung somit erreicht werden, dass die Nutzung einer Energiekopplungseinrichtung so verbessert werden kann, dass ein Technologieumstieg bezüglich einer Batterietechnologie ermöglicht beziehungsweise erleichtert werden kann.

Vorzugsweise ist die Steuereinheit ausgebildet, den Niedervoltenergiewandler auf Basis der Zwischenkreisgleichspannung regeln. Die Regelung der Gleichspannung des Kleinspannungsbordnetzes basiert also nicht auf der Gleichspannung an dem Hochvoltbordnetz, sondern lediglich auf der Zwischenkreisgleichspannung. Dadurch kann natürlich ein Energietransfer, insbesondere ein bidirektionaler Energietransfer verbessert werden. Gleichzeitig ergibt sich dadurch, dass die jeweils aktuell eingestellte Zwischenkreisgleichspannung als Basis für die Regelung dienen kann. Ferner ermöglicht es diese Ausgestaltung, mehrere Niedervoltenergiewandler für unterschiedliche Anwendungen an den Gleichspannungszwischenkreis anzuschließen und diese nahezu unabhängig voneinander zu betreiben. Dies erlaubt es, nicht nur das Kleinspannungsbordnetz mit dem Hochvoltbordnetz elektrisch zu koppeln, sondern zugleich auch weitere elektrische Energiequellen beziehungsweise Energiesenken, die mittels der weiteren Niedervoltenergiewandler an den Gleichspannungszwischenkreis elektrisch zu koppeln.

Vorzugsweise ist zumindest der Niedervoltenergiewandler als einzeln handhabbare Baueinheit ausgebildet, die nach Art einer Modulbauweise elektrisch und mechanisch mit der Energiekopplungseinrichtung verbindbar ist. Dadurch ist es möglich, die Energiekopplungseinrichtung auf einfache Weise für unterschiedlichste Anwendungen auszurüsten. Es können standardisierte Komponenten für die Energiekopplungseinrichtung erstellt werden, die bedarfsgerecht für individuelle Anwendungen komplettiert werden können. So besteht die Möglichkeit, für unterschiedliche Gleichspannungen unterschiedlicher Kleinspannungsbordnetze angepasst ausgebildete Niedervoltenergiewandler zu nutzen und nach dem Prinzip Plug-and-Play alternativ an einen entsprechenden Steckplatz der Energiekopplungseinrichtung anzuordnen. Vorzugsweise umfassen diese Niedervoltenergiewandler dann auch genormte Kommunikationsschnittstellen, die es der Steuereinheit erlauben, diese zu erkennen und entsprechend zu steuern. Dem Grunde nach gilt das Gleiche auch für den Hochvoltenergiewandler, der entsprechend der jeweiligen Bemessungsspannung beziehungsweise der eingesetzten Hochvoltbatterie auf der Hochvoltseite angepasst ausgebildet ist. Darüber hinaus können die Energiewandler auch entsprechend der erforderlichen Leistung ausgewählt und in der Energiekopplungseinrichtung vorgesehen werden. Dadurch ist ein hochflexibles modulares System für die Energiekopplungseinrichtung verfügbar, das es erlaubt, mit wenig Aufwand speziell angepasste Energiekopplungseinrichtungen bereitzustellen.

Zu diesem Zweck kann ferner vorgesehen sein, dass die Energiekopplungseinrichtung ein Gehäuse aufweist, in welchem wenigstens der Hochvoltenergiewandler und der Niedervoltenergiewandler angeordnet sind und welches wenigstens für den Niedervoltenergiewandler einen Steckplatz zum reversiblen elektrischen und mechanischen Verbinden des Niedervoltenergiewandlers aufweist.

Gemäß einer Weiterbildung wird vorgeschlagen, dass die Energiekopplungseinrichtung wenigstens einen weiteren, am Gleichspannungszwischenkreis anschließbaren Niedervoltenergiewandler zum elektrischen Koppeln einer externen elektrischen Energiequelle aufweist. Dadurch ist es auf einfache Weise möglich, ergänzend externe Energiequellen an die Energiekopplungseinrichtung anzuschließen und energietechnisch anzukoppeln, beispielsweise eine Solarzellenanordnung, eine Schnellladesäule, eine drahtlose Ladeeinrichtung, eine leitungsgebundene standardisierte Anschlussmöglichkeit und/oder dergleichen. Vorzugsweise sind auch die weiteren Energiewandler für eine bidirektionale Energiekopplung ausgebildet. Der weitere Energiewandler kann sowohl ein Hochvoltenergiewandler als auch ein Niedervoltenergiewandler sein, je nachdem, welche Spannungslage durch die externe Energiequelle bereitgestellt wird. Im einfachsten Fall kann der Energiewandler auch lediglich einen Gleichrichter umfassen, der ein öffentliches Energieversorgungsnetz als Energiequelle nutzt und daraus bereitgestellte Energie über die Energiekopplungseinrichtung zur Verfügung stellt. Zu diesem Zweck ist der Gleichrichter ferner an einen DC/DC-Wandler angeschlossen, der seinerseits an den Gleichspannungszwischenkreis angeschlossen ist.

Bei einem Kraftfahrzeug kann ferner vorgesehen sein, dass ein Hochvoltenergiewandler und wenigstens ein Niedervoltenergiewandler der Energiekopplungseinrichtung räumlich beabstandet zueinander angeordnet sind. Dies ermöglicht es, die Energiekopplungseinrichtung auch bei räumlich sehr begrenztem Möglichkeiten, beispielsweise im Kraftfahrzeug, anzuordnen. In diesem Fall können auch separate Gehäuse für wenigstens einige der Energiewandler vorgesehen sein.

Verfahrensseitig wird ferner vorgeschlagen, dass mittels der Steuereinheit eine Taktfrequenz des Hochvoltenergiewandlers und/oder wenigstens eines Niedervoltenergiewandlers abhängig von der Zwischenkreisgleichspannung eingestellt wird. Dadurch ist es möglich, die Wirkungsgrade der Energiewandler zu beeinflussen.

Weiterhin wird vorgeschlagen, dass ein Energiefluss zwischen den Energiewandlern mittels der Steuereinheit gesteuert wird. Dadurch kann die Zwischenkreisgleichspannung eingestellt werden. Insbesondere kann eine Wandlungsleistung eingestellt werden.

Die zuvor beschriebenen Vorteile und Wirkungen gelten nicht nur für die erfindungsgemäße Energiekopplungseinrichtung, sondern auch die mit der erfindungsgemäßen Energiekopplungseinrichtung ausgerüsteten Batterie beziehungsweise das mit der erfindungsgemäßen Energiekopplungseinrichtung ausgerüstete Kraftfahrzeug oder das mit der erfindungsgemäßen Batterie ausgerüstete Kraftfahrzeug sowie für das erfindungsgemäße Verfahren und umgekehrt.

Im Folgenden wird die Erfindung anhand von Ausführungsbeispielen unter Bezug auf die beigefügten Figuren weiter erläutert. In den Figuren bezeichnen gleiche Bezugszeichen gleiche Merkmale und Funktionen. Die Ausführungsbeispiele sollen die Erfindung lediglich weiter erläutern und nicht zur Einschränkung des Erfindungsgedankens dienen.

### Es zeigen:

- Fig. 1: ein Flurförderfahrzeug als Elektrofahrzeug gemäß dem Stand der Technik mit einem Blei-Säure-Akkumulator;
- Fig. 2: eine erste Ladestation für Akkumulatoren des Flurförderfahrzeugs gemäß Fig. 1;
- Fig. 3: eine zweite Ladestation für Akkumulatoren des Flurförderfahrzeugs gemäß Fig. 1;
- Fig. 4: eine schematische Prinzipdarstellung für einen elektrisch angetriebenen Personenkraftwagen mit einem Lithium-Ion-Akkumulator;
- Fig. 5: eine schematische Darstellung für eine Anpassung des Akkumulators des Personenkraftwagens gemäß Fig. 4 an einen Ackumulator für das Flurförderfahrzeug gemäß Fig. 1;
- Fig. 6: eine schematische Darstellung des Flurförderfahrzeugs gemäß Fig. 1 mit einem Akkumulator gemäß Fig. 5;
- Fig. 7: in einer schematischen Blockschaltbilddarstellung einen Aufbau für den Akkumulator, wie er im Flurförderfahrzeug gemäß Fig. 6 vorgesehen ist;
- Fig. 8: ein schematisches Blockschaltbild für einen Akkumulator gemäß Fig. 7, der modular aufgebaut ist und durch weitere Energiewandler ergänzbar ist;
- Fig. 9: ein schematisches Prinzipblockschaltbild für die Grundfunktion der Energiekopplungseinrichtung gemäß einer ersten Ausgestaltung der Erfindung;
- Fig. 10: ein schematisches Blockschaltbild für eine erste Ausgestaltung der Energiekopplungseinrichtung gemäß Fig. 9;
- Fig. 11: ein schematisches Prinzipblockschaltbild für eine zweite Ausgestaltung der Energiekopplungseinrichtung der Erfindung zum energietechnischen Anschließen an zwei Kleinspannungsbordnetze;
- Fig. 12: eine schematische Blockschaltbilddarstellung der Energiekopplungseinrichtung gemäß Fig. 11;
- Fig. 13: in einer schematischen Diagrammdarstellung mittels zweier Graphen eine Darstellung des Wirkungsgrades in Abhängigkeit von einem Auslastungsgrad der Energiekopplungseinrichtung gemäß Fig. 9; und
- Fig. 14: in einer schematischen Blockschaltbilddarstellung eine weitere Ausgestaltung einer Energiekopplungseinrichtung gemäß der Erfindung, die modular durch Hinzufügen beziehungsweise Entfernen von Niederspannungswandlern adaptierbar ist.

Die folgenden Ausführungsbeispiele beziehen sich auf eine Anwendung bei einem Flurförderfahrzeug wie einem Gabelstapler oder dergleichen, bei dem eine vorhandene Blei-Säure-Batterie durch eine Lithium-Ion-Batterie ersetzt werden soll. Die Erfindung ist jedoch grundsätzlich nicht auf diese Anwendung beschränkt.

Eine Batterie dient dem Grunde nach dazu, elektrische Energie reversibel zu speichern. Eine solche Batterie wird auch als Akkumulator bezeichnet. Zum Zwecke des reversiblen Energiespeicherns umfasst die Batterie in der Regel mehrere Batteriezellen, die als galvanische Zellen ausgebildet sind und elektrische Energie chemisch zu speichern vermögen. Zu diesem Zweck weist eine jeweilige Batteriezelle in der Regel zwei Elektroden auf, die elektrochemisch miteinander in Verbindung stehen, beispielsweise über einen Elektrolyten, der mit den Elektroden wechselwirkt. An den Elektroden stellt sich dann eine elektrische Gleichspannung ein, die sich im Wesentlichen aufgrund der Elektrochemie ergibt. Die Gleichspannung, die sich zwischen den Elektroden der einzelnen Batteriezelle einstellt, beträgt üblicherweise wenige Volt, beispielsweise etwa 1,2 V bis 4,5 V, abhängig von der Zellchemie.

Batterien der gattungsgemäßen Art, insbesondere Hochvoltbatterien, sollen jedoch häufig hohe Gleichspannungen bereitstellen, beispielsweise bei elektrisch antreibbaren Kraftfahrzeugen eine Gleichspannung in einem Bereich von mehreren 100 V, beispielsweise etwa 400 V oder mehr, insbesondere etwa 800 V. Daraus ergibt sich, dass zur Realisierung solcher Gleichspannungen durch eine Batterie eine Vielzahl von Batteriezellen elektrisch in Reihe geschaltet werden müssen. Je nach Energie- beziehungsweise Leistungsbedarf kann ergänzend auch noch eine Parallelschaltung von Batteriezellen erforderlich sein. Auch wenn dies in der Regel auf Hochvoltbatterien anwendbar ist, sind diese Überlegungen dem Grunde nach auch auf Batterien übertragbar, die im Bereich des Kleinspannungsbordnetzes zum Einsatz kommen und die für vorgegebene Spannungsbereiche angepasst ausgebildet sind, beispielsweise für eine Spannung von 12 V, 24 V, 48 V, 60 V, oder bei besonderen Anwendungen, wie zum Beispiel bei Flurförderfahrzeugen, im Bereich von 80 V.

Insbesondere bei elektrisch betriebenen Flurförderfahrzeugen als Elektrofahrzeugen ist in der Regel vorgesehen, dass eine elektrische Energieversorgung aus einer Batterie 12 erfolgt, die als Blei-Säure-Batterie ausgebildet ist. Ein Spannungsbereich für Bordnetze mit solchen Batterien 12 reicht beispielsweise von etwa 12 V bis etwa 80 V. Derartige Batterien 12 sind normiert hinsichtlich ihrer mechanischen und/oder elektrischen Eigenschaften und werden von unterschiedlichen Firmen bereitgestellt. An Batterieanschlusspolen einer solchen Batterie 12 liegt unmittelbar die entsprechende Batteriespannung an. An die Batterieanschlusspole wird eine elektrische Anlage, beispielsweise des Flurförderfahrzeuges, angeschlossen, die zum Beispiel neben elektrischen Einheiten auch eine Antriebseinrichtung für das Flurförderfahrzeug 10 umfasst.

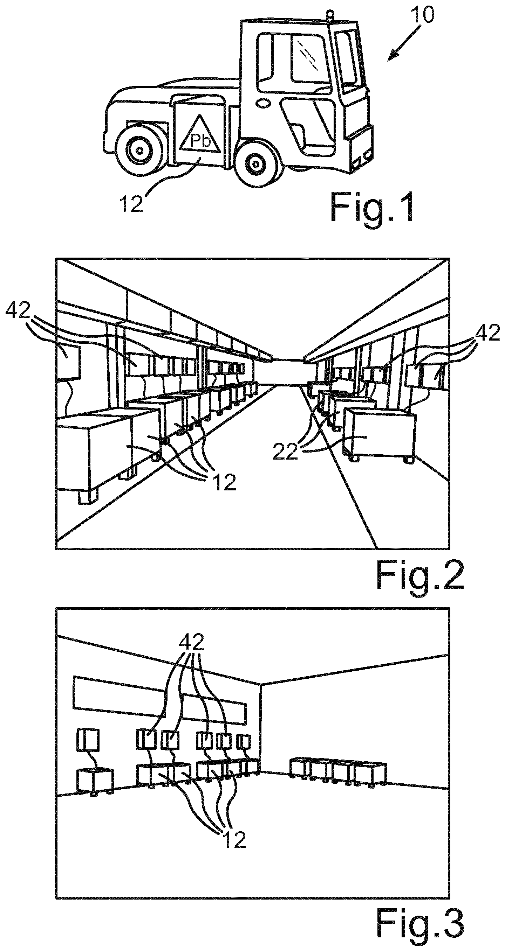

Fig. 1 zeigt in einer exemplarischen Darstellung ein Flurförderfahrzeug 10 als elektrisch antreibbares Kraftfahrzeug, welches vorliegend ein Elektrofahrzeug ist. Das Flurförderfahrzeug 10 umfasst einen austauschbar angeordneten Blei-Säure-Akkumulator. In dieser Ausstattung ist das Flurförderfahrzeug 10 dem Stand der Technik zuzurechnen. Das Flurförderfahrzeug 10 wird in der Materialwirtschaft und Logistik, insbesondere bei Industriebetrieben und hier insbesondere im Bereich der Lagerhaltung und der Versorgung der Fertigung eingesetzt. Die Fign. 2 und 3 zeigen in schematischen Ansichten Ladestationen 42 in nicht bezeichneten Räumen, in denen die Akkumulatoren 12 angeordnet sind. Jeweils ein Akkumulator 12 ist an eine der Ladestationen 42 zum elektrischen Aufladen angeschlossen.

Die Akkumulatoren 12 sind in den Flurförderfahrzeugen 10 austauschbar angeordnet, um eine Betriebsbereitschaft der Flurförderfahrzeuge 10 möglichst wenig durch den Ladungszustand des in ihm angeordneten Akkumulators 12 zu beeinträchtigen. Ein Austausch des Akkumulators 12 erfolgt ebenso wie ein Aschließen an die Ladestation 42 manuell und ist daher teuer und zeitaufwändig.

Die elektrische Anlage des Flurförderfahrzeugs 10 ist vorliegend für eine Bemessungsspannung von etwa 80 V ausgelegt. Gelegentlich kann sie auch bis zu etwa 120 V betragen. Eine Batterie 12 eines gattungsgemäßen Flurförderfahrzeugs 10 ist in der Regel als Blei-Säure-Batterie ausgebildet und weist zum Beispiel eine elektrische Kapazität bis etwa 540 Ah auf, wodurch sich eine gespeicherte elektrische Energiemenge von etwa 43 kWh ergibt. Die Batterie 12 des Flurförderfahrzeugs 10 ist dazu ausgelegt, kurzzeitig große Ströme bereitstellen zu können. Diesbezüglich begrenzende Elemente sind neben einer Sicherungseinheit auch ein elektrischer Steckverbinder, welcher typischerweise für einen elektrischen Strom von etwa 320 A ausgelegt ist. Hierbei handelt es sich um eine genormte Steckverbindung, wodurch ermöglicht wird, dass die Batterien 12 zum Zwecke des Aufladens beliebig gewechselt und mit den Ladegeräten 42 verbunden werden können. Im Dauerbetrieb kann vorgesehen sein, dass die Batterie 12 eine Leistung bis zu etwa 20 kW bereitstellt.

Das Flurförderfahrzeug 10 verfügt vorliegend darüber hinaus auch noch über ein separates 12 V-Bordnetz, an welchem eine gewöhnliche 12 V-Blei-Säure-Batterie 90 angeschlossen ist. Mit diesem Bordnetz werden Kleinleistungsverbraucher mit elektrischer Energie versorgt. Die 12 V-Blei-Säure-Batterie 90 ist jedoch nicht zwingend erforderlich, um das 12 V-Bordnetz zu betreiben. Es kann auch lediglich durch einen geeigneten DC/DC-Wandler bereitgestellt sein.

Nicht nur bei Flurförderfahrzeugen, sondern bei Kraftfahrzeugen im Allgemein ist in der Regel vorgesehen, dass Bewegungsenergie mittels Rekuperieren als elektrische Energie zurückgewonnen und in der Batterie gespeichert werden kann.

Bei den bekannten Flurförderfahrzeugen 10 erweist es sich als hinderlich, dass diese in der Regel lediglich über zwei Schichten von 8 Stunden betrieben werden können, woraufhin eine entsprechend lange Aufladephase für die Batterie 12 von etwa 7 bis 8 Stunden erforderlich ist. Während einer solchen Aufladephase kann die Batterie 12 nicht genutzt werden. Darüber hinaus erweist es sich als nachteilig, dass der Einsatz der Blei-Säure-Batterien 12 eine entsprechende Absaugvorrichtung für Wasserstoffgas benötigt, welches beim Aufladen solcher Batterien 12 freigesetzt wird. Da die Batterien 12 hinsichtlich ihrer Abmessungen und Verbindungseinrichtungen genormt sind, können sie zum Zwecke des Aufladens aus dem Fahrzeug 10 entnommen und der Ladeeinrichtung 42 zugeführt werden. Dies ist jedoch zeit- und personalaufwändig. Darüber hinaus sind häufig mehr Batterien 12 vorzusehen, als Flurförderfahrzeuge 10 vorhanden sind. Dies kann erforderlich sein, um eine vorgegebene Verfügbarkeit der Flurförderfahrzeuge 10 erreichen zu können, weil die Verfügbarkeit ansonsten aufgrund einer erforderlichen Zeit zum Aufladen der Batterien 12 begrenzt sein kann. Ein Batterieüberhang bezüglich einer Anzahl der Batterien 12 in Bezug auf die Anzahl der Flurförderfahrzeuge 10 kann beispielsweise 40% bis 50% oder auch mehr betragen.

Die Anwendung von Blei-Säure-Batterien, insbesondere bei Flurförderfahrzeugen, erweist sich insbesondere auch deshalb als nachteilig, weil sie in vergleichbar kleinen Stückzahlen angepasst für Flurförderfahrzeuge hergestellt werden müssen. Darüber hinaus erweist sich die hohe Ladezeit als nachteilig. Schließlich ist zu beachten, dass bei der Nutzung von Blei zukünftig mit Einschränkungen gerechnet werden kann, da Blei ein Umweltgift darstellt. Weiterhin ergeben sich hohe Aufwendungen in Bezug auf die Infrastruktur, die für das Nutzen der Blei-Säure-Batterie 12 erforderlich ist, insbesondere in Bezug auf einen entsprechenden Flächenbedarf für die Ladestationen 42, -plätze und/oder dergleichen, wie es aus den Fign. 2 und 3 ersichtlich ist.

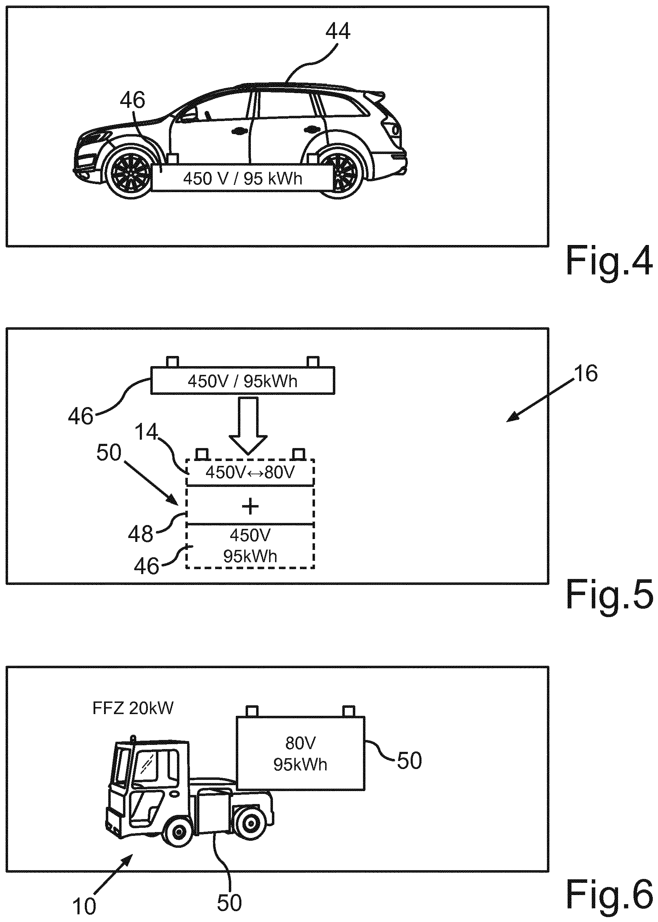

Fig. 4 zeigt in einer schematischen Ansicht einen elektrisch angetriebenen Personenkraftwagen 44, der ebenfalls ein Elektrofahrzeug ist und der schematisch dargestellt eine Hochvoltbatterie 46 für den bestimmungsgemäßen Betrieb auf Basis einer neuen Lithium-Ion-Technologie umfasst. Die Hochvoltbatterie 46 weist eine Vielzahl von nicht dargestellten Batteriezellen auf, die so verschaltet sind, dass an nicht bezeichneten Anschlusspolen der Hochvoltbatterie 46 eine Gleichspannung von etwa 450 V anliegt. Die Hochvoltbatterie 46 ist vorliegend für eine Energie von zum Beispiel etwa 95 kWh ausgebildet.

Fig. 5 zeigt in einer schematischen Darstellung, wie die Hochvoltbatterie 46 aus Fig. 4 genutzt werden kann, um den Akkumulator 12 des Flurförderfahrzeugs 10 gemäß Fig. 1 zu ersetzen. Dazu wird die Hochvoltbatterie 46 in ein Gehäuse 48 eingebaut, in welches zudem eine Energiekopplungseinrichtung 14 eingebaut wird. Das Gehäuse 48 weist die gleichen Abmessungen auf, wie sie die Batterie 12 aufweist. Diese Abmessungen sind vorliegend genormt.

Mit der Energiekopplungseinrichtung 14 erfolgt eine Energiekopplung dahingehend, dass die durch die Hochvoltbatterie 46 bereitgestellte Gleichspannung auf ein Niveau gewandelt wird, welches der durch den Akkumulator 12 bereitgestellten Gleichspannung entspricht. Diese Spannung beträgt vorliegend etwa 80 V. Darüber hinaus kann die Energiekopplungseinrichtung 14 natürlich auch dazu vorgesehen sein, weitere Spannungen, insbesondere Gleichspannungen, bereitzustellen, beispielsweise 12 V, 24 V, 48 V und/oder dergleichen. Die Energiekopplungseinrichtung 14 kann diesbezüglich entsprechend angepasst werden, wie im Folgenden noch weiter dargestellt wird. Durch das Gehäuse 48 wird eine Energieversorgungseinrichtung 50 gebildet, die als einzeln handhabbare Baugruppe ebenso wie der Akkumulator 12 gehandhabt werden kann. Fig. 6 zeigt das Flurförderfahrzeug 10 mit der Energieversorgungseinrichtung 50 gemäß Fig. 5.

Die Erfindung nutzt die Entwicklung von Hochvoltbatteriesystemen für Fahrzeugprojekte insbesondere im Bereich der Personenwagen. Die hier entwickelten Batteriesysteme können auf alternative Projekte übertragen werden, nämlich indem gemäß der Erfindung Anpassungen vorgenommen werden, sodass eine Vielzahl von weiteren Anwendungsmöglichkeiten eröffnet wird. Fig. 4 zeigt in schematischer Darstellung ein Hochvoltbatteriesystem auf Basis der Hochvoltbatterie 46, welche eine Mehrzahl von Einzelkomponenten wie einem Batteriefahrzeuggehäuse, Lithium-Ion-Batteriemodulen, vorliegend zum Beispiel 36 Stück, einer Batteriemanagementeinheit, einem Kühlsystem, einem Modulverbinder, Kabeln, Stromschienen, Steckverbindern und dergleichen aufweist. Für die Nutzung beim Flurförderfahrzeug 10 werden sämtliche notwendigen Komponenten der Hochvoltbatterie 46 herangezogen und in einem neuen Gehäuse, nämlich dem Gehäuse 48, integriert. Als Ergebnis steht ein Hochvoltbatteriesystem in einem anderen Gehäuse bereit, welches hinsichtlich der Abmessungen denen der Batterie 12 entspricht.

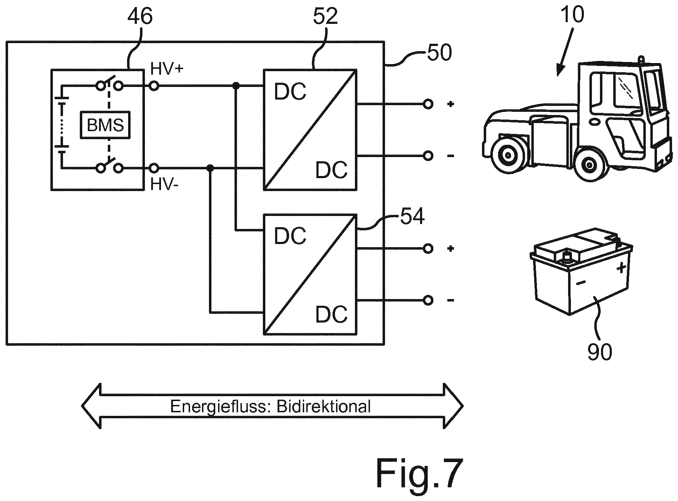

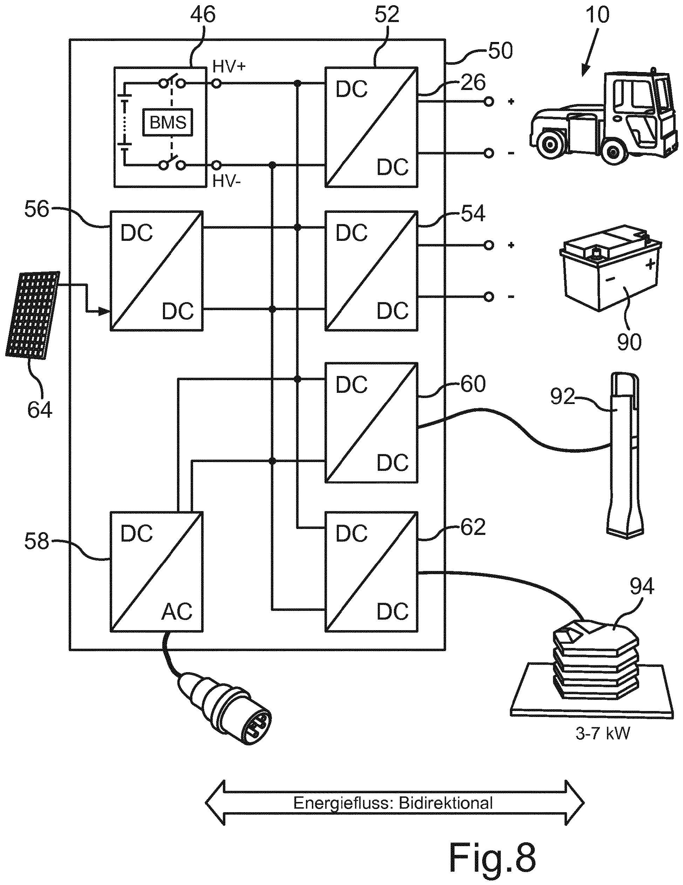

Damit dieses neu geschaffene Hochvoltbatteriesystem sich für die Anwendung bei dem Flurförderfahrzeug 10 eignet, ist es erforderlich, eine elektrische Gleichspannung von etwa 80 V bereitzustellen. Üblicherweise wird das Flurförderfahrzeug 10 mit dieser Gleichspannung betrieben. Daneben kann es natürlich auch Abweichungen hinsichtlich der Spannungen geben, beispielsweise kann das Flurförderfahrzeug in alternativen Ausgestaltungen auch eine Betriebsspannung von 60 V oder auch von 120 V nutzen. Aus diesem Grund ist im Gehäuse 46 eine Energiekopplungseinrichtung 14 vorgesehen. Diese führt eine Spannungswandlung von der Hochvoltseite auf die Kleinspannungsseite durch, das heißt, vorliegend von etwa 450 V auf etwa 80 V. Zu diesem Zweck wird ein DC/DC-Wandler eingesetzt. Vorzugsweise ist der DC/DC-Wandler bidirektional, sodass Rekuperationsenergie wieder in der Hochvoltbatterie 46 gespeichert werden kann. In den Fign. 7 und 8 ist dies beispielsweise mit dem Pfeil "Energiefluss: Bidirektional" bezeichnet.

Hierdurch wird erreicht, dass eine einzeln handhabbare Baueinheit geschaffen wird, nämlich die Energieversorgungseinrichtung 50, die geeignet ist, den Akkumulator 12 einfach zu ersetzen. Vorzugsweise können entsprechende Steuergeräte, die für den Betrieb der Batterie 12 optimiert sind, hinsichtlich ihres Betriebs an das neue Batteriesystem angepasst werden.

Vorliegend ist die Hochvoltbatterie eine Lithium-Ionen-Batterie, die mit der zuvor genannten Energiekapazität bei gleichem Volumen etwa doppelt so viel Energie bereitzustellen vermag, als es mit der Batterie 12 möglich ist. Darüber hinaus kann auch das ungünstige Blei-Säure-Batteriesystem mit seinen Nachteilen, insbesondere hinsichtlich der Umweltverträglichkeit und der Freisetzung von Knallgas während des Ladevorgangs vermieden werden.

Fig. 7 zeigt in einer schematischen Blockschaltbilddarstellung einen Aufbau der Energieversorgungseinrichtung 50 gemäß Fig. 5. Aus Fig. 7 ist ersichtlich, dass die Hochvoltbatterie 46 mit ihren beiden Anschlüssen an zwei DC/DC-Wandler 52, 54 angeschlossen ist, die jeweils eine Gleichspannung von 80 V beziehungsweise 12 V bereitstellen. Dadurch können im Flurförderfahrzeug 10 sämtliche elektrischen Einrichtungen wie gewohnt betrieben werden.

Fig. 8 zeigt eine Weiterbildung der Energieversorgungseinrichtung 50 gemäß Fig. 7, bei der an die Hochvoltbatterie 46 weitere DC/DC-Wandler beziehungsweise AC/DC-Wandler angeschlossen sind, wie die Energiewandler 54, 56, 58, 60, 62. Mit diesen Energiewandlern ist es möglich, weitere elektrische Einrichtungen in die Energieversorgungseinrichtung 50 zu integrieren und dadurch deren Vielseitigkeit in Bezug auf eine Nutzung weiter zu verbessern. So ist es beispielsweise möglich, mittels des DC/DC-Wandlers 60 eine DC/DC-Ladesäule 92 elektrisch zu koppeln, die zum Beispiel eine Ladeleistung von 150 kW bereitzustellen vermag. Dadurch ist es möglich, die Hochvoltbatterie 46 sehr schnell wieder aufzuladen, sodass die Standzeit des Flurförderfahrzeugs 10 möglichst gering gehalten werden kann. Dies kann ferner auch mit dem DC/DC-Wandler 62 erreicht werden, der für eine drahtlose Energiekopplung ausgebildet ist. Zu diesem Zweck ist eine Induktionsspule 94 an einer Unterseite des Flurförderfahrzeugs 10 angeordnet. Wird das Flurförderfahrzeug 10 oberhalb einer in einem Boden angeordneten Gegenspule abgestellt, kann auf diese Weise drahtlos Energie in die Hochvoltbatterie 46 gespeist werden. Es ist keine separate elektromechanische Kopplung erforderlich. Sind entsprechend viele Aufladestationen dieser Art vorhanden, kann ein nahezu kontinuierlicher Betrieb des Flurförderfahrzeugs 10 erreicht werden. Darüber hinaus besteht ferner die Möglichkeit, mittels des DC/DC-Wandlers 56 auch ein Solarpanel 64 anzuschließen, welches beispielsweise auf einem Dach des Flurförderfahrzeugs 10 angeordnet ist. Dadurch ist es möglich, dass durch entsprechende Lichteinstrahlung die Hochvoltbatterie 46 permanent aufgeladen wird, insbesondere auch tagsüber bei Betrieb des Flurförderfahrzeugs 10 im Freien, wenn das Solarpanel einer Sonnenstrahlung ausgesetzt ist. Darüber hinaus kann natürlich auch ein AC/DC-Wandler 58 vorgesehen sein, mittels dem das Flurförderfahrzeug an ein übliches dreiphasiges Wechselspannungsnetz angeschlossen werden kann, wie es beispielsweise in Fabrikhallen und dergleichen durch das öffentliche Energieversorgungsnetz bereitgestellt wird.

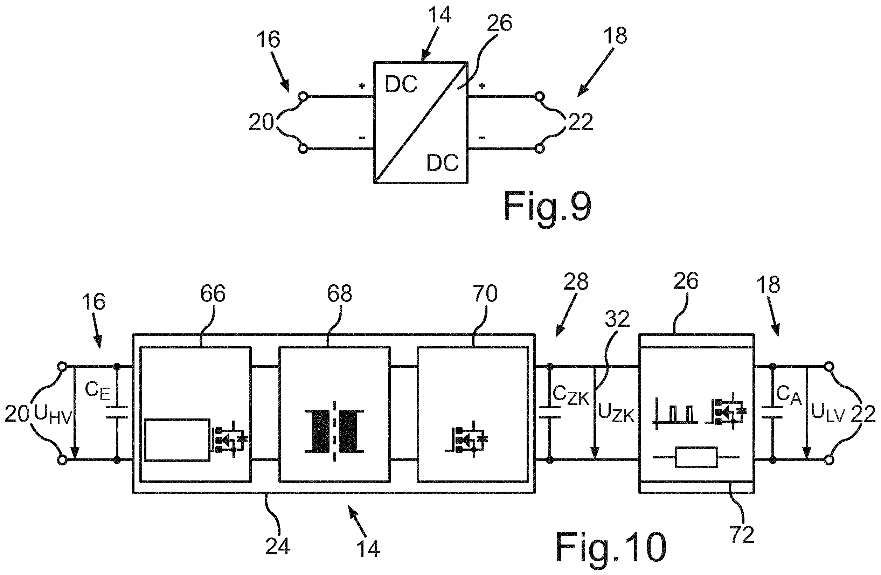

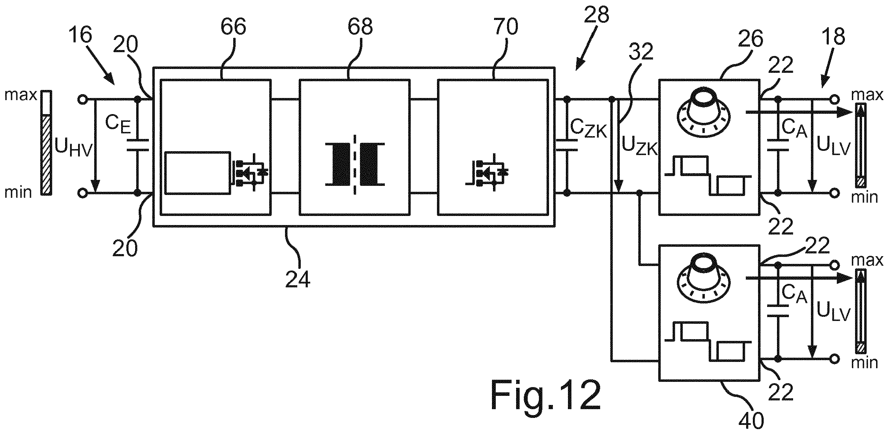

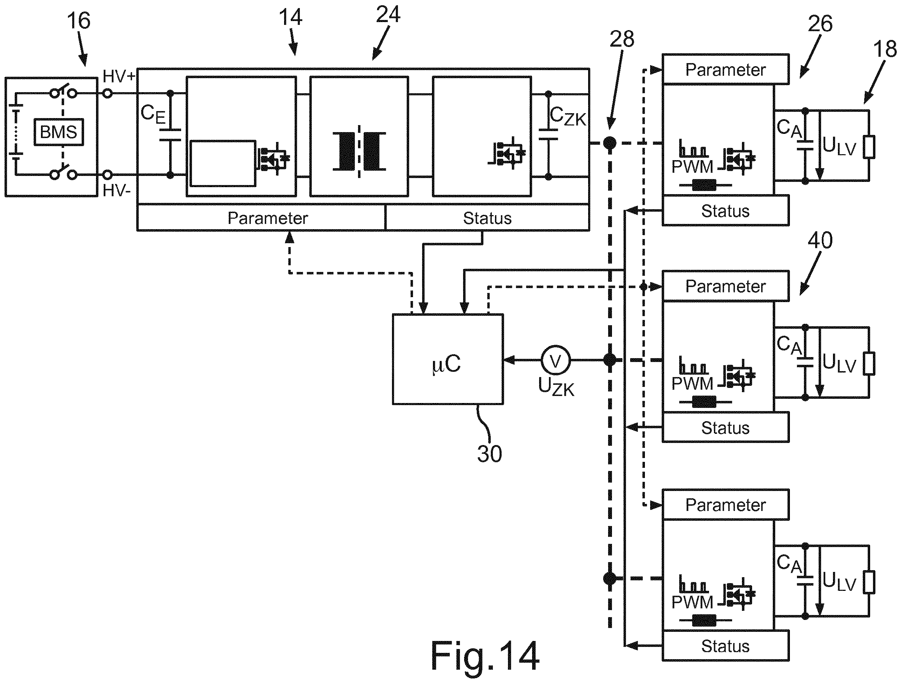

Fig. 9 zeigt in einer schematischen Übersichtsdarstellung eine Weiterbildung nach Art eines flexiblen DC/DC-Multiportumsetzerprinzips, um eine weitere Verbesserung beziehungsweise Optimierung zu ermöglichen. Aus Fig. 10 ist ersichtlich, dass diese Ausgestaltung sich dadurch auszeichnet, dass mittels eines ersten Energiewandlers, nämlich eines Hochvoltenergiewandlers 24, der vorzugsweise eine galvanische Trennung bereitstellt und eine fixe oder variable Taktung aufweisen kann, eine Zwischenkreisgleichspannung 32 an einem Gleichspannungszwischenkreis 28 bereitgestellt wird, an den ein Niedervoltenergiewandler 26 nach Art eines Anpassungsmoduls angeschlossen ist, der die gewünschte Gleichspannung an einem Kleinspannungsbordnetz 18 bereitstellt. Das Kleinspannungsbordnetz 18 umfasst vorliegend die Antriebseinrichtung des Flurförderfahrzeugs 10, und ist deshalb für eine Gleichspannung von etwa 80 V ausgelegt. Auf einfache Weise können weitere Anpassungsmodule nach Art des Niedervoltenergiewandlers 26 an den Gleichspannungszwischenkreis 28 angeschlossen werden, um die Funktionalität weiter zu erhöhen (Fig. 12, Fig. 14).

Vorliegend ist ferner vorgesehen, dass die Regelung der jeweiligen Gleichspannungen der Kleinspannungsbordnetze 18 auf der Zwischenkreisgleichspannung 32 des Gleichspannungszwischenkreises 28 beruht. Dadurch lassen sich vorteilhafte bidirektionale Energietransferkonzepte erreichen. Zugleich können eine Mehrzahl von DC/DC-Wandlern mit dem Ziel betrieben werden, einen möglichst optimalen Gesamtwirkungsgrad zu erreichen, wobei die Energiewandler zusammen mit dem Hochvoltenergiewandler 26 gemeinsam betrieben werden können.

Fig. 10 zeigt eine erste Ausgestaltung für die Energiekopplungseinrichtung 14. Die Energiekopplungseinrichtung 14 gemäß Fig. 10 dient zum elektrischen Koppeln eines für Gleichspannung ausgelegten Hochvoltbordnetzes 16, welches vorliegend durch die Hochvoltbatterie 46 gebildet ist, mit einem für Gleichspannung ausgelegten elektrischen Kleinspannungsbordnetz 18, welches vorliegend durch die Antriebseinrichtung des Flurförderfahrzeugs 10 gemäß Fig. 1 gebildet ist. Die Energiekopplungseinrichtung 14 umfasst einen Hochvoltanschluss 20 zum Anschließen der Energiekopplungseinrichtung 14 an das Hochvoltbordnetz 16, einen Kleinspannungsanschluss 22 zum Anschließen der Energiekopplungseinrichtung 14 an das Kleinspannungsbordnetz 18, einen an den Hochvoltanschluss 20 angeschlossenen Hochvoltenergiewandler 24, einen an den Kleinspannungsanschluss 22 angeschlossenen Niedervoltenergiewandler 26, einen Gleichspannungszwischenkreis 28, an den der Hochvoltenergiewandler 24 und der Niedervoltenergiewandler 26 zum elektrischen Koppeln der beiden Energiewandler 24, 26 angeschlossen sind, und eine Steuereinheit 30 zum Steuern der Energiewandler 24, 26 (Fig. 14).

Aus Fig. 10 ist ersichtlich, dass der Hochvoltenergiewandler 24 drei Funktionsbaugruppen aufweist, nämlich vorliegend einen DC/AC-Wandler 66, der an den Hochvoltanschluss 20 angeschlossen ist, einen Transformator 66, der mit einer Primärwicklung an einen AC-Anschluss des DC/AC-Wandlers 66 angeschlossen ist, sowie einen AC/DC-Wandler 70, der wechselspannungsseitig an eine Sekundärwicklung des Transformators 68 und gleichspannungsseitig an den Gleichspannungszwischenkreis 28 angeschlossen ist. Dadurch ist es möglich, zwischen dem Gleichspannungszwischenkreis 28 und dem Hochvoltbordnetz 16 eine vorzugsweise bidirektionale Energiewandlung bereitzustellen, wobei mittels des Transformators 68 eine galvanische Trennung erreicht wird. Hierdurch können im Bereich der Hochvoltbatterie 46 vorgesehene Sicherungseinrichtungen weiter zuverlässig im bestimmungsgemäßen Betrieb genutzt werden, sodass die elektrische Sicherheit verbessert ist.

An dem Gleichspannungszwischenkreis 28 ist als Niedervoltenergiewandler 26 ein DC/DC-Wandler 72 angeschlossen, der nach Art eines getakteten Energiewandlers eine bidirektionale Kopplung zwischen dem Kleinspannungsbordnetz 18 und dem Gleichspannungszwischenkreis 28 bereitstellt. Vorliegend ist vorgesehen, dass die Zwischenkreisgleichspannung 32 am Gleichspannungszwischenkreis 28 in einem Bereich ist, der durch die durch die Hochvoltbatterie 46 bereitgestellte Gleichspannung am Hochvoltanschluss 20 und der durch das Kleinspannungsbordnetz 18 bereitgestellten Gleichspannung an den Niedervoltanschlüssen 20 begrenzt ist. Mittels der Steuereinheit 30 werden der Hochvoltenergiewandler 24 und der Niedervoltenergiewandler 26 entsprechend gesteuert.

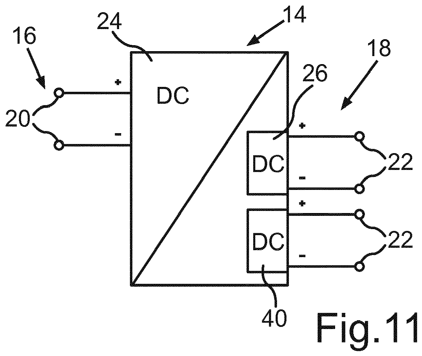

Fig. 11 zeigt eine Weiterbildung der Ausgestaltung gemäß Fig. 9, bei der nunmehr niederspannungsseitig zwei Niedervoltenergiewandler 26, 40 vorgesehen sind, die an zwei voneinander getrennte Kleinspannungsbordnetze 18 mit unterschiedlichen Gleichspannungen angeschlossen sind. Fig. 12 zeigt eine entsprechende Blockschaltbilddarstellung in einer schematischen Ansicht, wobei ersichtlich ist, dass die Niedervoltenergiewandler 26, 40 gleichspannungsseitig am Gleichspannungszwischenkreis 28 parallelgeschaltet angeschlossen sind. Dadurch ist es möglich, Energie nicht nur von der Hochvoltseite zu den jeweiligen Kleinspannungsbordnetzen 18 zu fördern, sondern auch von einem der Kleinspannungsbordnetze 18 zu dem anderen der Kleinspannungsbordnetze 18 und umgekehrt. Mittels der Steuereinheit 30 kann der Energiefluss entsprechend gesteuert werden.

Das erfinderische Konzept erlaubt es, die Niedervoltenergiewandler 26, 40 bei Kraftfahrzeugeinsatz auch an unterschiedlichen Stellen des Kraftfahrzeugs anzuordnen, vorzugsweise dort, wo deren Einsatz erforderlich ist und vorzugsweise auch dort, wo entsprechend Bauraum verfügbar ist. Es ist also dadurch eine erhöhte Flexibilität insbesondere beim Einsatz bei Kraftfahrzeugen wie dem Flurförderfahrzeug 10 gegeben. Bei reduziertem Betrieb, beispielsweise wenn ein Ladebetrieb lediglich mit 500 W Ladeleistung erfolgt, kann ferner auch eine Kühlung der Hochvoltbatterie 46 eingespart werden.

Der Gleichspannungszwischenkreis 28 braucht also nicht zwingend im Gehäuse 48 angeordnet zu sein, ebenso wie die Niedervoltenergiewandler 26, 40.

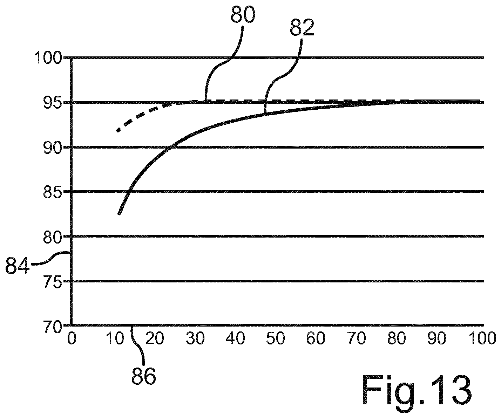

Aufgrund der Tatsache, dass es insbesondere im Teillastbereich zu großen Wirkungsgradeinbrüchen kommen kann, sieht die Erfindung vor, dass die Zwischenkreisgleichspannung 32 und gegebenenfalls auch eine Taktfrequenz der Energiewandler 24, 26, 40 entsprechend angepasst werden kann, indem die Steuereinheit 30 die Energiewandler 24, 26, 30 entsprechend ansteuert. Fig. 13 zeigt in einer schematischen Darstellung die Möglichkeiten, die mit der Erfindung hinsichtlich der Wirkungsgradverbesserung beispielsweise erreichbar sind. In Fig. 13 bezeichnet eine Abszisse 86 einen Auslastungsgrad der Energiekopplungseinrichtung 14 in %. Eine Ordinate 84 bezeichnet den Gesamtwirkungsgrad in %. In dem Diagramm in Fig. 13 ist schematisch mit einem ersten Graphen 82 dargestellt, wie sich der Wirkungsgrad bei gewöhnlicher Steuerung der Energiewandler 24, 26, 40 entwickelt. Erkennbar ist, dass bei einer Auslastung ab etwa 30% der Wirkungsgrad stark nachlässt und 90% deutlich unterschreitet. Dies hat nicht nur zum Nachteil, dass die Leistungsfähigkeit insgesamt reduziert wird, weil Energie in unerwünschter Weise verloren geht, sondern es reduziert auch die Mobilität, weil dadurch ein Ladevorgang häufiger durchgeführt werden muss, als wenn der Wirkungsgrad beibehalten werden könnte.

Mit dem Graphen 80 ist nunmehr eine Auswirkung auf den Wirkungsgrad aufgrund der Steuerung gemäß der Erfindung ersichtlich, wobei ersichtlich ist, dass der Gesamtwirkungsgrad bereits ab einer Auslastung von weniger als 80% über dem Wirkungsgrad liegt, der mit dem Stand der Technik erreichbar ist. Die Erfindung erreicht dies dadurch, dass die Zwischenkreisgleichspannung 32 entsprechend gesteuert wird, sodass sämtliche Wirkungsgrade aller Energiewandler 24, 26, 40 für die Ermittlung eines Gesamtwirkungsgrads herangezogen werden und dieser maximiert wird. Besonders bei geringen Auslastungen unterhalb von 40% erweist sich das erfindungsgemäße Verfahren als vorteilhaft, weil dadurch auch im Teillastbereich eine große Energieausnutzung erreicht werden kann. Dadurch können gerade im Teillastbereich besonders lange Betriebszeiten zwischen aufeinanderfolgenden Ladevorgängen erreicht werden. Die Erfindung ermöglicht es also, eine dynamische Wirkungsgradoptimierung durchzuführen und dadurch die Betriebsbereitschaft des Flurförderfahrzeugs 10 erheblich zu verbessern.

Fig. 14 zeigt eine weitere Ausgestaltung für die Energiekopplungseinrichtung 14, die auf der Ausgestaltung gemäß Fig. 12 basiert, weshalb ergänzend auf die Ausführungen zu diesem Ausführungsbeispiel verwiesen wird. Ersichtlich ist aus Fig. 14, dass in modularer Weise eine Vielzahl von weiteren Niedervoltenergiewandlern wie den Niedervoltenergiewandlern 26, 40 ergänzend am Gleichspannungszwischenkreis 28 angeschlossen werden können, sodass die Energiekopplungseinrichtung 14 für eine Vielzahl von weiteren Anwendungen adaptiert werden kann. Hierzu brauchen lediglich entsprechende Steckplätze zur Verfügung gestellt zu werden, in denen entsprechende Niedervoltenergiewandler angeordnet werden können. Gerade hier zeigt sich dann auch der Vorteil der wirkungsgradoptimierten Steuerung, weil nämlich die Vielzahl von Energiewandlern hinsichtlich ihres bestimmungsgemäßen Betriebs insgesamt optimiert werden kann. Darüber hinaus ist das System dadurch höchst flexibel, weil es auf einfache Weise an unterschiedlichste Betriebsbedingungen insbesondere auch Kraftfahrzeuge beziehungsweise Flurförderfahrzeuge angepasst werden kann. So ist es möglich, die Energiekopplungseinrichtung 14 auf einfache Weise auch für ein Flurförderfahrzeug anzupassen, welches eine Betriebsspannung von 48 V nutzt. Zu diesem Zweck braucht lediglich der Niedervoltenergiewandler 26 durch einen für eine entsprechende Gleichspannung ausgebildeten Niedervoltenergiewandler ersetzt zu werden. Im Idealfall kann dies nach Art von Plug-and-Play erfolgen. Es brauchen dann vorzugsweise auch keine Sicherheits- beziehungsweise Typprüfungen durchgeführt zu werden, insbesondere dann nicht, wenn die einzelnen Komponenten bereits geprüfte Komponenten sind.

Mit der Erfindung lässt sich also insbesondere erreichen, dass die bereits für den großen Markt an Elektrokraftfahrzeugen entwickelten Akkumulatoren auch für andere Anwendungen genutzt werden können, insbesondere für Flurförderfahrzeuge wie dem Flurförderfahrzeug 10. Durch die Erfindung kann eine einfache Anpassung an die unterschiedlichsten Betriebserfordernisse erreicht werden.

Auch wenn die Erfindung vorliegend anhand von Flurförderfahrzeugen erläutert wurde und dies natürlich auch allgemein auf Kraftfahrzeuge erweiterbar ist, kann die Erfindung natürlich gleichermaßen auch für stationäre Energieversorgungseinrichtungen zum Einsatz kommen.

Die Ausführungsbeispiele dienen ausschließlich der Erläuterung der Erfindung und sollen diese nicht beschränken. Darüber hinaus kann natürlich vorgesehen sein, dass Vorrichtungsmerkmale als Verfahrensmerkmale oder auch umgekehrt formuliert werden.

## Patentansprüche

1. Energiekopplungseinrichtung (14) zum energietechnischen Koppeln eines für Gleichspannung ausgelegten elektrischen Hochvoltbordnetzes (16) mit einem für Gleichspannung ausgelegten elektrischen Kleinspannungsbordnetz (18), mit einem Hochvoltanschluss (20) zum Anschließen der Energiekopplungseinrichtung (14) an das Hochvoltbordnetz (16), einem Kleinspannungsanschluss (22) zum Anschließen der Energiekopplungseinrichtung (14) an das Kleinspannungsbordnetz (22), einem an den Hochvoltanschluss (20) angeschlossenen Hochvoltenergiewandler (24), einem an den Kleinspannungsanschluss (22) angeschlossenen Niedervoltenergiewandler (26), einem Gleichspannungszwischenkreis (28), an den der Hochvoltenergiewandler (24) und der Niedervoltenergiewandler (26) zum elektrischen Koppeln der beiden Energiewandler (24, 26) angeschlossen sind, und eine Steuereinheit (30) zum Steuern der Energiewandler (24, 26),
**dadurch gekennzeichnet, dass**
die Steuereinheit (30) ausgebildet ist, Wandlungswirkungsgrade der Energiewandler (24, 26) zu ermitteln und eine Zwischenkreisgleichspannung (32) des Gleichspannungszwischenkreises (28) abhängig von einem durch eine Summe der Wandlungswirkungsgrade gebildeten Gesamtwirkungsgrad einzustellen, um den Gesamtwirkungsgrad zu maximieren.

2. Energiekopplungseinrichtung nach Anspruch 1,
**dadurch gekennzeichnet, dass**
die Steuereinheit (30) ausgebildet ist, den Niedervoltenergiewandler (26) auf Basis der Zwischenkreisgleichspannung (32) zu regeln.

3. Energiekopplungseinrichtung nach einem der vorhergehenden Ansprüche,
**dadurch gekennzeichnet, dass**
zumindest der Niedervoltenergiewandler (26) als einzeln handhabbare Baueinheit ausgebildet ist, die nach Art einer Modulbauweise elektrisch und mechanisch mit der Energiekopplungseinrichtung (14) verbindbar ist.

4. Energiekopplungseinrichtung nach Anspruch 3,
**gekennzeichnet durch**
ein Gehäuse (12), in welchem wenigstens der Hochvoltenergiewandler (24) und der Niedervoltenergiewandler (26) angeordnet sind und welches wenigstens für den Niedervoltenergiewandler (26) einen Steckplatz zum reversiblen elektrischen und mechanischen Anschließen des Niedervoltenergiewandlers (26) aufweist.

5. Energiekopplungseinrichtung nach einem der vorhergehenden Ansprüche,
**gekennzeichnet durch**
wenigstens einen weiteren, am Gleichspannungszwischenkreis (28) anschließbaren Niedervoltenergiewandler (40) zum elektrischen Koppeln einer externen elektrischen Energiequelle.

6. Batterie (50) mit einem Batteriegehäuse (48) und wenigstens zwei an dem Batteriegehäuse (48) angeordneten Batterieanschlusspolen zum Anschließen der Batterie (50) an ein Bordnetz (16, 18), mit einer Mehrzahl von Batteriezellen, die in dem Batteriegehäuse (48) angeordnet sind und die mechanisch miteinander verbunden und elektrisch gemäß einem vorgegebenen Anschlussschema miteinander gekoppelt und an die Batteriepole angeschlossen sind,
**gekennzeichnet durch**
eine Energiekopplungseinrichtung (14) nach einem der vorhergehenden Ansprüche, die in dem Batteriegehäuse angeordnet ist.

7. Kraftfahrzeug (10) mit einem Hochvoltbordnetz (16) und einem Kleinspannungsbordnetz (18),
**gekennzeichnet durch**
eine Energiekopplungseinrichtung (14) nach einem der Ansprüche 1 bis 5 oder einer an dem Hochvoltbordnetz (16) und/oder dem Kleinspannungsbordnetz (18) angeschlossenen Batterie (50) nach Anspruch 6.

8. Kraftfahrzeug nach Anspruch 7,
**dadurch gekennzeichnet, dass**
ein Hochvoltenergiewandler (24) und wenigstens ein Niedervoltenergiewandler (26, 40) der Energiekopplungseinrichtung (14) räumlich beabstandet zueinander angeordnet sind.

9. Verfahren zum Betreiben einer ein für Gleichspannung ausgelegtes Hochvoltbordnetz (16) mit einem für Gleichspannung ausgelegten elektrischen Kleinspannungsbordnetz (18) elektrisch koppelnden Energiekopplungseinrichtung (14) mit einem an das Hochvoltbordnetz (16) angeschlossenen Hochvoltenergiewandler (24) und einem an das Kleinspannungsbordnetz (18) angeschlossenen Niedervoltenergiewandler (26), die mittels eines Gleichspannungszwischenkreises (28) elektrisch gekoppelt werden, wobei die Energiewandler (24, 26) mittels einer Steuereinheit (30) gesteuert werden,
**dadurch gekennzeichnet, dass**
Wandlungswirkungsgrade der Energiewandler (24, 26) ermittelt werden und eine Zwischenkreisgleichspannung (32) des Gleichspannungszwischenkreises (28) abhängig von einem durch eine Summe der Wandlungswirkungsgrade gebildeten Gesamtwirkungsgrad eingestellt wird, um den Gesamtwirkungsgrad zu maximieren.

10. Verfahren nach Anspruch 9,
**dadurch gekennzeichnet, dass**
mittels der Steuereinheit (30) eine Taktfrequenz des Hochvoltenergiewandlers (24) und/oder wenigstens eines Niedervoltenergiewandlers (26, 40) abhängig von der Zwischenkreisgleichspannung (32) eingestellt wird.

11. Verfahren nach Anspruch 9 oder 10,
**dadurch gekennzeichnet, dass**
ein Energiefluss zwischen den Energiewandlern (24, 26, 40) mittels der Steuereinheit (30) gesteuert wird.

## Claims

1. Energy coupling device (14) for power coupling a high-voltage on-board electrical system (16) designed for DC voltage to a low-voltage on-board electrical system (18) designed for DC voltage, comprising a high-voltage terminal (20) for connecting the energy coupling device (14) to the high-voltage on-board electrical system (16), a low-voltage terminal (22) for connecting the energy coupling device (14) to the low-voltage on-board electrical system (22), a high-voltage energy converter (24) connected to the high-voltage terminal (20), a low-voltage energy converter (26) connected to the low-voltage terminal (22), a DC voltage intermediate circuit (28), to which the high-voltage energy converter (24) and the low-voltage energy converter (26) are connected for electrically coupling the two energy converters (24, 26), and a control unit (30) for controlling the energy converters (24, 26),
**characterised in that**
the control unit (30) is designed to determine degrees of conversion efficiency of the energy converters (24, 26) and to set an intermediate circuit DC voltage (32) of the DC voltage intermediate circuit (28) as a function of a total efficiency produced by a sum of the degrees of conversion efficiency, in order to maximise the total degree of efficiency.

2. Energy coupling device according to claim 1,
**characterised in that**
the control unit (30) is designed to regulate the low-voltage energy converter (26) on the basis of the intermediate circuit DC voltage (32).

3. Energy coupling device according to any of the preceding claims,
**characterised in that**
at least the low-voltage energy converter (26) is designed as an individually manageable unit, which can be electrically and mechanically connected to the energy coupling device (14) as a type of modular construction.

4. Energy coupling device according to claim 3,
**characterised by**
a housing (12), in which at least the high-voltage energy converter (24) and the low-voltage energy converter (26) are arranged and which includes at least one slot for the low-voltage energy converter (26) for the reversible electrical and mechanical connection of the low-voltage energy converter (26).

5. Energy coupling device according to any of the preceding claims,
**characterised by**
at least one further low-voltage energy converter (40) connectable to the DC voltage intermediate circuit (28) for the electrical coupling of an outside electrical energy source.

6. Battery (50) comprising a battery housing (48) and at least two battery terminal poles arranged on the battery housing (48) for connecting the battery (50) to an on-board electrical system (16, 18), having a plurality of battery cells that are arranged in the battery housing (48) and that are mechanically connected to one another and electrically coupled to each other according to a specified connection diagram and are connected to the battery poles,
**characterised by**
an energy coupling device (14) according to any of the preceding claims which is arranged in the battery housing.

7. Motor vehicle (10) with a high-voltage on-board electrical system (16) and a low-voltage on-board electrical system (18),
**characterised by**
an energy coupling device (14) according to any of claims 1 to 5 or a battery (50) connected to the high-voltage on-board electrical system (16) and/or the low-voltage on-board electrical system (18) according to claim 6.

8. Motor vehicle according to claim 7,
**characterised in that**
a high-voltage energy converter (24) and at least one low-voltage energy converter (26, 40) of the energy coupling device (14) are arranged spatially at a physical distance from each other.

9. Method for operating an energy coupling device (14) electrically coupling a high-voltage on-board electrical system (16) designed for DC voltage to a low-voltage on-board electrical system (18) designed for DC voltage, having a high-voltage energy converter (24) connected to the high-voltage on-board electrical system (16) and a low-voltage energy converter (26) connected to the low-voltage on-board electrical system (18), which are electrically coupled by means of a DC voltage intermediate circuit, wherein the energy converters (24, 26) are controlled by means of a control unit (30),
**characterised in that**
degrees of conversion efficiency of the energy converters (24, 26) are determined and an intermediate circuit DC voltage (32) of the DC voltage intermediate circuit (28) is set as a function of a total degree of efficiency produced by a sum of the degrees of conversion efficiency, in order to maximise the total degree of efficiency.

10. Method according to claim 9,
**characterised in that**
the control unit (30) is used to set a clock frequency of the high-voltage energy converter (24) and/or at least one low-voltage energy converter (26, 40) as a function of the intermediate circuit DC voltage (32).

11. Method according to claim 9 or 10,
**characterised in that**
an energy flow between the energy converters (24, 26, 40) is controlled by means of the control unit (30).

## Revendications

1. Dispositif de couplage énergétique (14) pour le couplage par technique énergétique d'un réseau de bord haute tension (16) électrique configuré pour une tension continue à un réseau de bord basse tension (18) électrique configuré pour une tension continue, avec un raccordement haute tension (20) pour le raccordement du dispositif de couplage énergétique (14) au réseau de bord haute tension (16), un raccordement basse tension (22) pour le raccordement du dispositif de couplage énergétique (14) au réseau de bord basse tension (22), un convertisseur d'énergie haute tension (24) raccordé au raccordement haute tension (20), un convertisseur d'énergie basse tension (26) raccordé au raccordement basse tension (22), un circuit intermédiaire à tension continue (28), auquel le convertisseur d'énergie haute tension (24) et le convertisseur d'énergie basse tension (26) sont raccordés pour le couplage électrique des deux convertisseurs d'énergie (24, 26), et une unité de commande (30) pour la commande des convertisseurs d'énergie (24, 26),
**caractérisé en ce que**
l'unité de commande (30) est réalisée pour déterminer des rendements de conversion des convertisseurs d'énergie (24, 26) et pour régler une tension continue de circuit intermédiaire (32) du circuit intermédiaire à tension continue (28) en fonction d'un rendement global formé par une somme des rendements de conversion, afin d'optimiser le rendement global.

2. Dispositif de couplage énergétique selon la revendication 1,
**caractérisé en ce que**
l'unité de commande (30) est réalisée pour réguler le convertisseur d'énergie basse tension (26) sur la base de la tension continue de circuit intermédiaire (32).

3. Dispositif de couplage énergétique selon l'une quelconque des revendications précédentes,
**caractérisé en ce que**
au moins le convertisseur d'énergie basse tension (26) est réalisé en tant qu'unité modulaire pouvant être manipulée individuellement, qui peut être reliée électriquement et mécaniquement au dispositif de couplage énergétique (14) à la façon d'une structure modulaire.

4. Dispositif de couplage énergétique selon la revendication 3,
**caractérisé par**
un boîtier (12), dans lequel sont disposés au moins le convertisseur d'énergie haute tension (24) et le convertisseur d'énergie basse tension (26) et lequel présente au moins pour le convertisseur d'énergie basse tension (26) un emplacement de connexion pour le raccordement électrique et mécanique réversible du convertisseur d'énergie basse tension (26).

5. Dispositif de couplage énergétique selon l'une quelconque des revendications précédentes,
**caractérisé par**
au moins un autre convertisseur d'énergie basse tension (40) pouvant être raccordé au circuit intermédiaire à tension continue (28) pour le couplage électrique d'une source d'énergie électrique externe.

6. Batterie (50) avec un boîtier de batterie (48) et au moins deux pôles de raccordement de batterie disposés sur le boîtier de batterie (48) pour le raccordement de la batterie (50) à un réseau de bord (16, 18), avec une pluralité d'éléments de batterie, qui sont disposés dans le boîtier de batterie (48) et qui sont reliés mécaniquement les uns aux autres et couplés électriquement les uns aux autres conformément à un schéma de raccordement prédéfini et raccordés aux pôles de batterie,
**caractérisée par**
un dispositif de couplage énergétique (14) selon l'une quelconque des revendications précédentes, qui est disposé dans le boîtier de batterie.

7. Véhicule à moteur (10) avec un réseau de bord haute tension (16) et un réseau de bord basse tension (18),
**caractérisé par**
un dispositif de couplage énergétique (14) selon l'une quelconque des revendications 1 à 5 ou une batterie (50) selon la revendication 6 raccordée au réseau de bord haute tension (16) et/ou au réseau de bord basse tension (18).

8. Véhicule à moteur selon la revendication 7,
**caractérisé en ce que**
un convertisseur d'énergie haute tension (24) et au moins un convertisseur d'énergie basse tension (26, 40) du dispositif de couplage énergétique (14) sont disposés spatialement à distance l'un de l'autre.

9. Procédé pour faire fonctionner un dispositif de couplage énergétique (14) couplant électriquement un réseau de bord haute tension (16) configuré pour une tension continue à un réseau de bord basse tension (18) électrique configuré pour une tension continue, avec un convertisseur d'énergie haute tension (24) raccordé au réseau de bord haute tension (16) et un convertisseur d'énergie basse tension (26) raccordé au réseau de bord basse tension (18), qui sont couplés électriquement au moyen d'un circuit intermédiaire à tension continue (28), dans lequel les convertisseurs d'énergie (24, 26) sont commandés au moyen d'une unité de commande (30),
**caractérisé en ce que**
les rendements de conversion des convertisseurs d'énergie (24, 26) sont déterminés et une tension continue de circuit intermédiaire (32) du circuit intermédiaire à tension continue (28) est réglée en fonction d'un rendement global formé par une somme des rendements de conversion, afin d'optimiser le rendement global.

10. Procédé selon la revendication 9,
**caractérisé en ce que**
une fréquence d'horloge du convertisseur d'énergie haute tension (24) et/ou au moins d'un convertisseur d'énergie basse tension (26, 40) est réglée en fonction de la tension continue de circuit intermédiaire (32) au moyen de l'unité de commande (30).

11. Procédé selon la revendication 9 ou 10,
**caractérisé en ce que**
un flux d'énergie entre les convertisseurs d'énergie (24, 26, 40) est commandé au moyen de l'unité de commande (30).
